(19) Europäisches Patentamt
European Patent Office
Office européen des brevets

(11) **EP 2 072 340 A1**

(12) **EUROPEAN PATENT APPLICATION**
published in accordance with Art. 153(4) EPC

(43) Date of publication:
**24.06.2009 Bulletin 2009/26**

(51) Int Cl.:
***B60R 13/02*** *(2006.01)* ***B32B 27/12*** *(2006.01)*

(21) Application number: **07807826.8**

(22) Date of filing: **25.09.2007**

(86) International application number:
**PCT/JP2007/068554**

(87) International publication number:
**WO 2008/041552 (10.04.2008 Gazette 2008/15)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.09.2006 JP 2006265802**

(71) Applicant: **NITTO DENKO CORPORATION Ibaraki-shi, Osaka 567-8680 (JP)**

(72) Inventors:
• **TACHIBANA, Katsuhiko Ibaraki-shi, Osaka 567-8680 (JP)**
• **FUJII, Takahiro Ibaraki-shi, Osaka 567-8680 (JP)**

(74) Representative: **Schwabe - Sandmair - Marx Patentanwälte Stuntzstrasse 16 81677 München (DE)**

(54) **REINFORCING MATERIAL FOR VEHICLE CEILING MATERIAL**

(57) A reinforcing material for a vehicle ceiling material has an adhesive strength of not less than 1.0 N/25 mm in a 90 ° peel test on a polyester non-woven fabric, and a flexural strength of not less than 10 N at a displacement of 1 mm, and a maximum flexural strength of not less than 40 N after the reinforcing material for a vehicle ceiling material is sticked to a steel plate having a thickness of 0.8 mm, and heated at 200 °C for one minute.

FIG. 1

(a)

(b) VEHICLE-OUTSIDE SIDE

VEHICLE-INSIDE SIDE

(c) VEHICLE-OUTSIDE SIDE

VEHICLE-INSIDE SIDE

**Description**

Technical Field

The present invention relates to a reinforcing material for a vehicle ceiling material and, more particularly, to a reinforcing material for a vehicle ceiling material for reinforcing a vehicle ceiling material such as an automobile ceiling material.

Background Art

Conventionally, a ceiling material is provided on the side of a roof panel (steel plate) in an automobile roof which is closer to the interior of a vehicle. The ceiling material is typically formed as a laminate structure of an interior material, a foaming layer, a non-foaming layer, and the like.
As such a ceiling material, there has been proposed, e.g., an automobile interior material obtained by temporarily joining, to a surface material (interior material) via a hot melt adhesive, a laminate sheet for an automobile interior material which includes a foaming sheet for an automobile interior material made of a modified polyphenylene ether-based resin and having a residual volatile content of 3 to 5 wt% and a basis weight of 100 to 280 g/m$^2$, and a non-foaming layer made of a thermoplastic resin laminated on the foaming sheet for an automobile interior material, and heating the laminate sheet for an automobile interior material at 135 °C for 30 seconds to cause foaming and curing therein (see, e.g., Patent Document 1 shown below)

Patent Document: Japanese Unexamined Patent No. 11-343358

[Disclosure of the Invention]

[Problems to be solved]

To improve rigidity in an automobile interior material described in Patent Document 1 shown above, it is known to increase the weighing (basis weight) of the laminate sheet for an automobile interior material, or otherwise provide the automobile interior material with an additional frame made of iron.
However, when the weighing of the laminate sheet for an automobile interior material is increased, a ceiling material becomes accordingly heavier to result in the problem that a lightweight property cannot be ensured for the ceiling material. Increasing the weighing also requires accordingly more material to result in the problem of increased production cost. In addition, it may be difficult to increase a thickness by increasing the weighing when the space between the interior material and the roof panel is narrow.
When the frame made of iron is provided, the frame needs to be produced in accordance with the shape of the ceiling material corresponding to a vehicle type, which results in the problem that intricacy, significant time and labor are involved.
An object of the present invention is to provide a reinforcing material for a vehicle ceiling material which allows the rigidity of a vehicle ceiling material to be easily and conveniently improved at low cost, while allowing the retention of the lightweight property of the vehicle ceiling material.

Means for Solving the Problems

To attain the object, a reinforcing material for a vehicle ceiling material of the present invention has an adhesive strength of not less than 1.0 N/25 mm in a 90 ° peel test on a polyester non-woven fabric; and a flexural strength of not less than 10 N at a displacement of 1 mm, and a maximum flexural strength of not less than 40 N after the reinforcing material for a vehicle ceiling material is sticked to a steel plate having a thickness of 0.8 mm, and heated at 200 °C for one minute.
It is preferable that the reinforcing material for a vehicle ceiling material of the present invention includes a constraining layer, and a reinforcing layer.
It is preferable that the reinforcing material for a vehicle ceiling material of the present invention has a thickness of not more than 1 mm.
In the reinforcing material for a vehicle ceiling material of the present invention, it is preferable that an amount of formaldehyde in a Tedlar bag method shown below is not more than 100 μg/m$^3$.
Tedlar Bag Method: After the reinforcing material for a vehicle ceiling material (80 cm$^2$) is placed in a Tedlar bag with a capacity of 10 L, tightly sealed in the Tedlar bag, and heated at 65 °C for two hours, an amount of formaldehyde in the Tedlar bag is measured, and determined in accordance with a formula shown below.

$$\text{Amount of Formaldehyde } (\mu g/m^3) = \text{Amount of Formaldehyde } (\mu g) \text{ in}$$

$$\text{Tedlar Bag/Capacity } (m^3) \text{ in Tedlar Bag.}$$

In the reinforcing material for a vehicle ceiling material of the present invention, it is preferable that a haze value of a glass plate under a test condition shown below can be adjusted to be not more than 15.

Test Condition: After a bottom-closed cylindrical glass bottle with a mouth (having a mouth inner diameter of 40 mm, a cylindrical inner diameter of 70 mm, and a height of 170 mm) in which the reinforcing material for a vehicle ceiling material having a length of 100 mm, a width of 50 mm, and a thickness of 10 mm is sealed is placed in an oil bath (wherein a depth of oil is 110 mm) at 80 °C, the mouth is lidded with the glass plate, an iron plate is placed as a weight on the glass plate, the bottom-closed cylindrical glass bottle with the opening is allowed to stand for 20 hours, and then the haze value of the glass plate is measured.

Effect of the Invention

With the reinforcing material for a vehicle ceiling material of the present invention, it is possible to improve the rigidity of a vehicle ceiling material by sticking the reinforcing material for a vehicle ceiling material to a desired portion of a vehicle ceiling material, i.e., the portion of the vehicle ceiling material where improved rigidity is needed, and curing it by heating.

Because a rigidity improvement can be achieved without increasing the weighing of the vehicle ceiling material, a lightweight property can be ensured. In addition, because there is no need for a plenty of material, a reduction in production cost can be achieved. Further, because the thickness of the vehicle ceiling material is not increased, the vehicle ceiling material can be reinforced even when the space between the vehicle ceiling material and a roof panel is narrow, as long as the position where the reinforcing material for a vehicle ceiling material is sticked can be reserved.

Additionally, it is unnecessary to individually produce a frame in accordance with a vehicle type. The vehicle ceiling material can be easily and conveniently reinforced by forming the vehicle ceiling material, and then sticking the reinforcing material for a vehicle ceiling material to the portion of the vehicle ceiling material where improved rigidity is needed.

Brief Description of the Drawings

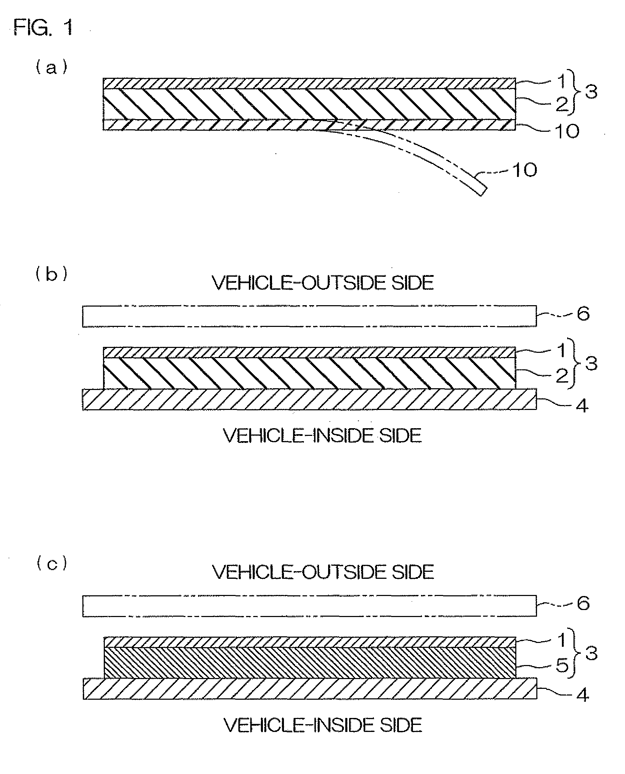

[FIG. 1] FIG. 1 is a process step view showing an embodiment of a reinforcing method of a vehicle ceiling material using a reinforcing material for a vehicle ceiling material of the present invention,

(a) showing the step of preparing the reinforcing material for a vehicle ceiling material, and stripping mold release paper,
(b) showing the step of sticking the reinforcing material for a vehicle ceiling material to the vehicle ceiling material, and
(c) showing the step of heating the reinforcing material for a vehicle ceiling material to cure it.

[FIG. 2] FIG. 2 is a plan view of the vehicle ceiling material to which the reinforcing material for a vehicle ceiling material shown in FIG. 1 has been sticked.

[FIG. 3] FIG. 3 is a view illustrating a state in which a bottom-closed cylindrical glass bottle with a mouth in which the reinforcing material for a vehicle ceiling material has been sealed is dipped in an oil bath under a test condition for measuring a haze value of a glass plate.

Embodiments of the Invention

A reinforcing material for a vehicle ceiling material of the present invention is a reinforcing material for reinforcing, e.g., a vehicle ceiling material provided on the side of a roof panel (steel plate) in an automobile roof which is closer to the interior of a vehicle, and includes, e.g., a constraining layer and a resin layer.

The constraining layer imparts tenacity to a cured resin layer (hereinafter referred to as a cured material layer). Preferably, the constraining layer has a sheet-like shape, and is formed from a lightweight and thin-film material capable of being integrated with the cured material layer in close contact relation therewith. Examples of such a material that may be used inlcude glass cloth, resin-coated glass cloth, a non-woven fabric, a metal foil, carbon fiber, and the like.

The glass cloth is cloth woven from glass fiber. More specifically, the glass cloth is woven from glass fiber bundles each obtained by tying a plurality of glass filaments in a bundle, and known glass cloth is used.

As the resin-coated glass cloth, there is used glass cloth impregnated and thereby coated with a synthetic resin such as a thermosetting resin or a thermoplastic resin.

Examples of the thermosetting resin that may be used include an epoxy resin. Examples of the thermoplastic resin that may be used include a vinyl acetate resin, an ethylene-vinyl acetate copolymer (EVA), a vinyl chloride resin, and an EVA-vinyl chloride resin copolymer. It is also possible to mix the thermosetting resin mentioned above and the thermoplastic resin mentioned above (e.g., the epoxy resin and the vinyl acetate resin), and use the mixture.

As the resin-coated glass cloth, there is preferably used glass-coated glass cloth (hereinafter referred to as first resin-coated glass cloth) obtained by impregnating glass cloth with an epoxy resin composition, or a resin-coated glass cloth (hereinafter referred to as second resin-coated glass cloth) obtained by coating glass cloth with a first resin emersion, and then further coating the glass cloth with a second glass emersion different from the first resin emersion.

The first resin-coated glass cloth can be obtained by impregnating glass cloth with a water dispersion of the epoxy resin composition, drying the glass cloth, and thereby coating the glass cloth with the epoxy resin composition. The glass cloth used for the first resin-coated glass cloth can be obtained by tying in bundles a plurality of glass filaments obtained by rolling molten glass to provide the glass fiber bundles, and weaving the glass fiber bundles using a jet loom or the like.

A typical weave texture in the glass cloth is plain weave, but it is not limited thereto. For example, a weave texture may be a modified plain weave such as a mat weave or a rib weave, a twill wave, a satin weave, or the like. Preferably, the plain weave is used.

The density of the glass fiber bundles in the woven glass cloth is determined such that the glass cloth has a mass (weighing) in a range of 150 to 300 $g/m^2$, or preferably 180 to 260 $g/m^2$ before a resin-coating process. The mass of the glass cloth can be calculated in accordance with a measurement method in compliance with JIS R3420 7.2.

The glass cloth thus woven typically has a thickness of 100 to 300 $\mu$m, and an air permeability of 2 to 20 $cm^3/cm^2$/sec. The air permeability can be calculated in accordance with a method in compliance with JIS R3420 7.14. As a more specific example of the glass cloth used for the first resin-coated glass cloth, there may be used glass cloth in which the yarn number of each of the glass fiber bundles is in the range of 5 to 250 tex (tex yarn number), the diameters of the glass filaments are in the range of 3 to 13 $\mu$m, the number of the bundles is in the range of 100 to 800, and the number of twist of the glass fiber bundle is in the range of 0.1 to 5.0/25 mm, and the density of the glass fiber bundles is in the range of 30 to 80/25 mm.

In the production of glass cloth used for the first resin-coated glass cloth, the glass fiber bundles are normally subjected to the process of adhering a known sizing agent thereto.

In the production of the first resin-coated glass cloth, glass cloth with the sizing agent adhered thereto may be impregnated with the water dispersion of the epoxy resin composition, or may be impregnated with the water dispersion of the epoxy resin composition after the sizing agent is removed by degreasing the glass cloth. The glass cloth may also be treated with a silane coupling agent.

Specific examples of such a silane coupling agent that may be used include vinyltrichlorosilane, vinyltriethoxysilane, vinyltris(β-methoxyethoxy)silane, γ-methacryloxypropyltrimethoxysilane, γ-aminopropyltriethoxysilane, γ-anilinopropyltrimethoxysilane, N-β-aminoethyl-γ-aminopropyltrimethoxysilane, N-vinylbenzyl-aminaethyl-γ-aminopropyltrimethoxysilane (hydrochloride), γ-glycidoxypropyltrimethoxysilane, β-(3,4-epoxycyclohexyl)ethyltrimethoxysilane, γ-mercaptopropyltrimethoxysilane, and γ-chloropropyltrimethoxysilane. These silane coupling agents may be used either alone or in combination. Among them, the γ-glycidoxypropyltrimethoxysilane is preferably used. An amount of the silane coupling agent adhered to the glass cloth is in a range of, e.g., 0.01 to 2 wt%, or preferably 0.05 to 0.5 wt% relative to the glass cloth.

After the glass cloth (including the glass cloth subjected to the process of adhering the sizing agent and the glass cloth subjected to the process of adhering the silane coupling agent) is obtained by weaving the glass fiber bundles, a weave-opening process such as an ultrasonic process in a high-pressure water flow or solution is performed to enlarge the widths of warp yarns and weft yarns in the glass fiber bundles, thereby allowing the use of the glass cloth subjected to the weave-opening process, and more closely textured to a certain degree.

In the first resin-coated glass cloth, the epoxy resin composition contains at least an epoxy resin and a curing agent. More preferably, the epoxy resin composition contains an acrylic acid polymer.

Examples of the epoxy resin that may be used include an aromatic epoxy resin such as, e.g., a bisphenol-type epoxy resin (such as e.g., a bisphenol A type epoxy resin, a bisphenol F type epoxy resin, a bisphenol S type epoxy resin, a hydrogenated bisphenol A type epoxy resin, or a dimer-acid-modified bisphenol-type epoxy resin), a novolak-type epoxy resin (such as, e.g., a phenol-novolak-type epoxy resin, a cresol-novolak-type epoxy resin, or a biphenyl-type epoxy resin), or a naphthalene-type epoxy resin, a ring containing nitrogen epoxy resin such as, e.g., triepoxypropyl isocyanurate (triglycidylisocyanurate), or a hydantoin epoxy resin, an aliphatic epoxy resin, an alicyclic epoxy resin (such as, e.g., dicyclo ring-type epoxy resin), a glycidyl ether-type epoxy resin, and a glycidyl amine-type epoxy resin. These epoxy resins may be used either alone or in combination. Among these epoxy resins, preferably the bisphenol-type epoxy resin, or more preferably the bisphenol A type epoxy resin is used in terms of a curing speed and operating efficiency.

The curing agent is not limited as long as it is a curing agent typically used as a curing agent for an epoxy resin. Examples of the curing agent that may be used include an amine compound such as, e.g., polyamine, an amide compound such as, e.g., dicyandiamide, and an isocyanate compound. These curing agents can be used either alone or in combination of two or more thereof. Preferably, polyamine or dicyandiamide is used.

The mixing ratio of the curing agent is in a range of, e.g., 1 to 15 parts by weight, or preferably 1.2 to 4.0 parts by weight based on 100 parts by weight (a solid concentration) of the epoxy resin composition.

Examples of the acrylic acid polymer that may be used include a polyacrylic acid, a polymethacrylic acid, a polyacrylic acid ester, a polymethacrylic acid ester, a derivative thereof, or a copolymer thereof. The mixing ratio of the acrylic acid polymer is in a range of, e.g., 0.2 to 2,0 wt%, preferably 1 to 10 parts by weight, or more preferably 1.5 to 5 wt% based on the total amount of the water dispersion of the epoxy resin composition.

In addition to the epoxy resin, the curing agent, and the acrylic acid polymer each mentioned above, a known additive such as a curing accelerator, an organic silane compound, an emulsifier, an anti-foaming agent, or a pH adjustor, and a resin other than the epoxy resin may be mixed appropriately in the epoxy resin composition.

Examples of the curing accelerator that may be used include an imidazole compound, a tertiary amine compound, and a phosphorus compound. The mixing ratio of the curing accelerator is in a range of, e.g., 0.5 to 2 parts by weight based on 100 parts by weight (a solid concentration) of the epoxy resin composition.

Examples of the organic silane compound that may be used include amino silanes and epoxy silanes. The mixing ratio of the organic silane compound is in the range of 0.01 to 0.5 parts by weight based on 100 parts by weight of the glass cloth used for the first resin-coated glass cloth.

To obtain the first resin-coated glass cloth, the glass cloth mentioned above is first impregnated with the water dispersion of the epoxy resin composition.

The water dispersion of the epoxy resin composition is prepared by adding the epoxy resin, the curing agent, and the acrylic acid polymer each mentioned above, other components as necessary, and the like to water, and stirring the mixture. In the preparation of the water dispersion of the epoxy resin composition, the pH of the water dispersion of the epoxy resin composition is adjusted to a value in a range of about 8 to 12 by further adding, e.g., an aqueous alkaline solution such as aqueous ammonia. Through the pH adjustment, the viscosity of the water dispersion of the epoxy resin composition is adjusted to a range of, e.g., $300 \times 10^{-3}$ to $900 \times 10^{-3}$ Pa-sec, or preferably $400 \times 10^{-3}$ to $800 \times 10^{-3}$ Pa-sec.

In the preparation of the water dispersion of the epoxy resin composition, the solid concentration of the water dispersion of the epoxy resin composition (i.e., the solid concentration of the epoxy resin composition) is adjusted to a range of, e.g., 10 to 30 wt%, or preferably 15 to 25 wt%.

For the impregnation, a known dipping method can be used, such as dipping or coating using a spray, a kiss-roll, an applicator, a knife coater, a reverse roll coater, a gravure coater, a flow coater, a rod coater, or a brush. After the impregnation, an excess amount of the water dispersion of the epoxy resin composition is squeezed out using, e.g., a mangle, a coating knife, or the like. By the squeezing out of the water dispersion, an amount of the impregnating epoxy resin composition relative to the glass cloth (i.e., the amount of the epoxy resin composition adhered to the glass cloth), and the air permeability can be suppressed.

Then, the glass cloth is dried to be covered with the epoxy resin composition, and thereby the first resin-coated glass cloth can be obtained. The drying may be performed usually by heating the glass cloth at typically 100 to 250 °C. and evaporating moisture.

In the first resin-coated glass cloth thus obtained, the amount of the impregnating epoxy resin composition relative to the glass cloth after the drying is in a range of, e.g., 2 to 15 parts by weight, or preferably 3 to 10 parts by weight based on 100 parts by weight of the glass cloth.

The air permeability is in a range of, e.g., not more than 0.5 $cm^3/cm^2/sec$, or preferably not more than 0.1 $cm^3/cm^2/see$.

The rate of penetration of the epoxy resin composition into the glass fiber bundles is in a range of, e.g., 20 to 70%, or preferably 30 to 60 %.

The rate of penetration of the epoxy resin composition into each of the glass fiber bundles can be calculated according to the following formula (1).

$$\text{Rate of Penetration (\%)} = S2/(S0 - S1) \times 100 \quad \dots (1)$$

wherein S0 is a cross-sectional area of the glass fiber bundle, S1 is a total cross-sectional area of the glass filaments in the glass fiber bundle, and S2 is a cross-sectional area penetrated by the epoxy resin composition in the glass fiber bundle.

The calculation of the rate of penetration is actually performed by impregnating the glass cloth with the water dispersion of the epoxy resin composition, squeezing out the water dispersion, and drying the glass cloth to obtain the first resin-coated glass cloth, image-processing a cross section of the first resin-coated glass cloth with TVIP-4100 commercially available from Nippon Avionics Co., Ltd., and analyzing the image-processed cross section.

The first resin-coated glass cloth thus obtained has a tensile strength in a range of, e.g., 650 to 1000 N. The tensile strength can be calculated in accordance with a measurement method in compliance with JIS R3420 7.4(a).

The elastic modulus of the first resin-coated glass cloth is, e.g., not less than 9000 N/mm$^2$. The elastic modulus is calculated on the assumption that the thickness of the first resin-coated glass cloth is equal to the thickness H (mm) of the glass cloth in accordance with $98/(H \times 25) \times (150/L)$ by grasping the first resin-coated glass cloth having a width of 25 mm so as to provide a space of 150 mm, stretching a test sample at a speed of 100 mm/minute with a tensile strength tester till the tensile strength reaches 98 N, and measuring an elongation L (mm) of the test sample.

The Flexural resilience of the first resin-coated glass cloth is in a range of, e.g., 700 to 850 mg. The flexural resilience can be calculated in accordance with a measurement method in compliance with JIS L1096 8.20.1.

The glass fiber of the glass cloth used for the second resin-coated glass cloth can be obtained in accordance with the same method as used for the glass fiber of the glass cloth used for the first resin-coated glass cloth mentioned above.

The weave texture in the glass cloth used for the second resin-coated glass cloth is the same as that in the glass cloth used for the first resin-coated glass cloth, and is preferably the plain weave.

For the second resin-coated glass cloth, there is used glass fiber which is the same as that used for the first resin-coated glass cloth mentioned above in terms of the density of the glass fiber bundles in the glass cloth, the thickness of the glass cloth, and the air permeability thereof.

More specifically, in the glass cloth used for the second resin-coated glass cloth, the diameter of a single yarn is in a range of, e.g., 6 to 11 μm, or preferably 9 to 11 μm, and the number of single yarns is in a range of, e.g., 50 to 800, or preferably 200 to 800. As such glass fiber, a commercially available product can be used and, more specifically, a product termed, e.g., DE300, DE150, DE75, E225, E113, G150, G75, G37, or the like is used. Among them, G75 and DE75 are preferably used. As raw glass for such glass fiber, glass termed E glass (no-alkali glass) is used for example but, in addition to this, silica glass, D glass (with a low dielectric property), S glass (with a high strength), C glass (alkali lime), H glass (with a high dielectric property), or the like can also be used.

After the glass fiber is warped, and subjected a starching process as necessary, the glass cloth can be woven in accordance with a known method using, e.g., a jet loom (air jet loom, water jet loom, or the like), a Sulzer loom, a rapier loom, or the like. In the starching process mentioned above, the warped glass fiber is processed with, e.g., a sizing agent (secondary binder) in accordance with a known method. Examples of such a sizing agent that may be used include starch, a surfactant, a lubricant, a synthetic oil agent, polyvinyl alcohol (poval), and an acrylic polymer.

For the glass cloth, woven glass cloth can also be used without any alteration as greige glass cloth, e.g., or temporarily baked glass cloth obtained by performing a heating process with respect to the greige glass cloth can also be used. Otherwise, glass cloth obtained by performing a heating process with respect to the greige glass cloth to burn and remove (heat clean) the sizing agent and the like can also be used.

After the glass cloth (including the greige glass cloth, the temporarily baked glass cloth, and the heat cleaned glass cloth) is obtained by weaving the glass fiber bundles, it is also possible to perform a weave-opening process such as an ultrasonic process in a high-pressure water flow or solution to enlarge the widths of warp yarns and weft yarns in the glass fiber bundles, thereby allowing the use of the glass cloth subjected to the weave-opening process, and more closely textured to a certain degree.

After the glass cloth mentioned above is treated with the same silane coupling agent as mentioned above as necessary, the glass cloth may also be dried in the same manner as described above.

In the glass cloth used for the second resin-coated glass cloth, a void ratio X between the warp yarns or weft yarns constituting the glass cloth is given by the following formula (2), and the void ratio X satisfies the range shown by the following formula (3).

$$X = (b/a) \times 100 \qquad ... (2)$$

$$X \leq 5 \qquad ... (3)$$

wherein X represents a void ratio (%) between the warp yarns or the weft yarns constituting the glass cloth, a represents a distance (μm) between the centers of the width of the adjacent warp yarns or a distance (μm) between the centers of the width of the adjacent weft yarns, and b represents a space (μm) between two adjacent warp yarns or weft yarns.

Then, the glass cloth obtained as described above is coated with a first resin emulsion (hereinafter referred to as a primary coating process).

Examples of the first resin emulsion used for the primary coating process include a styrene-based resin emulsion, an acrylic resin emulsion, a vinyl acetate resin emulsion, and an ethylene-vinyl acetate (EVA) resin emulsion. Among these first resin emulsions, the styrene-based resin emulsion is preferably used.

Examples of the styrene-based resin emulsion that may be used include a polystyrene resin emulsion, a HIPS (high-impact polystyrene with impact resistance) resin emulsion, an AS (acrylonitrile-styrene copolymer) resin emulsion, an ABS (acrylonitrile-butadiene-styrene copolymer) resin, an ACS (acrylonitrile-chlorinated polyethylene-styrene copolymer) resin, an AES (acrylonitrile-ethylene-styrene copolymer) resin, an MBS (methylmethacrylate-butadiene-styrene copolymer) resin, and an AAS (acrylonitrile-acrylate-styrene copolymer) resin.

These first resin emulsions may be used either alone or in combination.

In the primary coating process, impregnation is performed in the same method as used for the impregnation of the first resin-coated glass cloth described above. Thereafter, in accordance with the same method as described above, an excess amount of the first resin emulsion is squeezed out, and then drying is performed in the same manner as described above.

In the primary coating process, the amount of the impregnating (adhered) first resin emulsion is in a range of, e.g., 2 to 15 parts by dry weight, or preferably 5 to 8 parts by dry weight based on 100 parts by dry weight of the glass cloth.

Then, the glass cloth treated with the first coating process is coated with a second resin emulsion different from the first resin emulsion (hereinafter referred to as a secondary coating process).

Examples of the second resin emulsion used for the secondary coating process include an epoxy resin emulsion, an urethane resin emulsion, and an olefin resin emulsion. Among these second resin emulsions, the epoxy resin emulsion is preferably used.

As the epoxy resin of the epoxy resin emulsion, the same epoxy resin as that of the epoxy resin composition used for the first resin-coated glass cloth mentioned above is used. Preferably, the bisphenol-type epoxy resin is used. These second resin emulsions may be used either alone or in combination.

In the secondary coating process, impregnation is performed in the same method as used for the impregnation of the first resin-coated glass cloth described above. Thereafter, in accordance with the same method as described above, an excess amount of the second resin emulsion is squeezed out, and then drying is performed in the same manner as described above.

In the secondary coating process, the amount of the impregnating (adhered) second resin emulsion is in a range of, e.g., 0.01 to 5 parts by dry weight, or preferably 0.05 to 2.5 parts by dry weight based on 100 parts by dry weight of the glass cloth.

The non-woven fabric is obtained by fusing a fiber sheet, and a known non-woven fabric such as a polyester non-woven fabric is used. For the non-woven fabric, there can also be used a non-woven fabric subjected to an impregnation process using a synthetic resin such as the thermosetting or thermoplastic resin mentioned above.

For the metal foil, a known metal foil such as an aluminum foil or a steel foil is used.

For the constraining layer, glass cloth and resin-coated glass cloth are used among those shown above in consideration of weight, adhesion, rigidity, and cost. More preferably, the glass cloth is used in consideration of the amount of generated formaldehyde.

The thickness of such a constraining layer is in a range of, e.g., not more than 0.3 mm, or preferably not more than 0.25 mm, and normally not less than 0.1 mm, or preferably not less than 0.15 mm.

The weighing of the constraining layer is in a range of, e.g., not more than 300 g/m$^3$, or preferably not more than 250 g/m$^3$, and normally not less than 100 g/m$^3$, or preferably not less than 150 g/m$^3$.

The resin layer is laminated on the constraining layer, and integrated by curing with the constraining layer in close contact relation therewith to reinforce the vehicle ceiling material. A curing composition which is cured by heating is formed into a sheet-like shape to provide the resin layer. The curing composition contains, e.g., a resin and a curing agent.

The resin is, e.g., an epoxy resin. For example, the same epoxy resin as used for the first resin-coated glass cloth mentioned above is used.

When consideration is given to a reinforcing property, the bisphenol-type epoxy resin is preferably used and, more preferably, the bisphenol A type epoxy resin is used. These resins may be used either alone or in combination.

Such an epoxy resin has an epoxy equivalent of 180 to 700 g/equiv. The epoxy equivalent can be calculated from the concentration of oxirane oxygen measured by titration using hydrogen bromide.

Examples of such an epoxy resin that may be used include one which is fluid at a room temperature. More specifically, to implement excellent adhesion at a low temperature, the viscosity thereof at 25 °C is, e.g., not more than 25 Pa·s, and normally not less than 1.0 Pa·s.

The mixing ratio of the epoxy resin is in a range of, e.g., 40 to 99 parts by weight, or preferably 70 to 99 parts by weight based on 100 parts by weight of the curing composition.

Examples of the curing agent that may be used include an amine compound, an acid anhydride compound, an amide compound, a hydrazide compound, an imidazole compound, and an imidazoline compound. In addition, a phenol compound, an urea compound, a polysulfide compound, or the like may also be used.

Examples of the amine compound that may be used include polyamines such as ethylenediamine, propylenediamine, diethylenetriamine, and triethylenetetramine, and amine adducts thereof such as metaphenylenediamine, diaminodiphenylmethane, and diaminodiphenylsulfone.

Examples of the acid anhydride compound that may be used include phthalic anhydride, maleic anhydride, tetrahydrophthalic anhydride, hexahydrophthalic anhydride, methylnajic anhydride, pyromellitic anhydride, dodecenylsuccinic anhydride, dichlorosuccinic anhydride, benzophenonetetracarboxylic anhydride, and chlorendic anhydride.

Examples of the amide compound that may be used include dicyandiamide and polyamide.

Examples of the hydrazide compound that may be used include dihydrazide adipate.

Examples of the imidazole compound that may be used include methylimidazole, 2-etlayl-4-inethylirnidazole, ethylimidazole, isopropylimidazole, 2,4-dimethylimidazole, phenylimidazole, undecylimidazole, heptadecylimidazole, and 2-phenyl-4-methylimidazole.

Examples of the imidazoline compound that may be used include methylimidazoline, 2-ethyl-4-methylimidazoline, ethylimidazoline, isopropylimidazoline, 2,4-dimethylimidazoline, phenylimidazoline, undecylimidazoline, heptadecylimidazoline, and 2-phenyl-4-methylimidazoline.

These curing agents may be used either alone or in combination. It is also possible to modify these curing agents, and use the modified curing agents.

When consideration is given to a curing time and a curing temperature, a latent curing agent is preferably used among these curing agents.

The latent curing agent is a curing agent which is solid at a room temperature, and becomes fluid at a predetermined temperature to cure a resin. For example, an amine compound, an amide compound, or the like is used. Preferably, polyamine, dicyandiamide, modified polyamine or dicyandiamide, or a derivative thereof is used.

In the present invention, the melting point of the latent curing agent is in a range of, e.g., not less than 80 °C, or preferably not less than 100 °C, and normally not more than 300 °C. When the melting point is under the range shown above, a curing reaction may proceed during the kneading of the curing composition, or during the molding thereof.

As such polyamine and dicyandiamide (including modified polyamine or dicyandiamide, and a derivative thereof), commercially available products can be used. More specifically, there is used ADEKA HARDENER EH-4370S (modified aliphatic polyamine having a melting point of 125 °C, commercially available form Adeka Corporation), ADEKA HARDENER EH-4388S (a mixture of a dicyandiamide derivative and an organic compound having a melting point of 170 °C, commercially available form Adeka Corporation), or the like. The curing agent may be used either alone or in combination.

The mixing ratio of the curing agent depends on the equivalent of the resin (e.g., the epoxy equivalent of the epoxy resin), and is in a range of, e.g., 7 to 50 parts by weight, or preferably 10 to 40 parts by weight based on 100 parts by weight of the resin. When the mixing ratio of the curing agent is less than 7 parts by weight, a reinforcing property may deteriorate. On the other hand, when the mixing ratio of the curing agent is more than 50 parts by weight, a storage stability may deteriorate.

In addition to the components mentioned above, the curing composition may also contain a curing accelerator and a filler as necessary.

Examples of the curing accelerator that may be used include an imidazole compound, an urea compound, a tertiary amine compound, a phosphorus compound, a quaternary ammonium salt compound, and an organometallic salt compound. These curing accelerators may be used either alone or in combination, and the mixing ratio thereof is in a range of, e.g., 0.1 to 10 parts by weight, or preferably 0.2 to 5 parts by weight based on the total amount of 100 parts by weight of the resin and the curing agent.

Examples of the filler that may be used include calcium carbonate (such as, e.g., heavy calcium carbonate, light calcium carbonate, or HAKUENKA™), talc, mica, clay, mica powder, bentonite (including organic bentonite), silica, alumina, aluminum hydroxide (alumina), aluminum silicate, magnesium hydroxide, titanium oxide, carbon black, aluminum powder, glass powder, and glass balloon. These fillers may be used either alone or in combination, and the mixing ratio thereof is in a range of, e.g., 10 to 500 parts by weight, or preferably 50 to 300 parts by weight based on 100 parts by weight of the resin. When such a filler is caused to be contained, the reinforcing effect can be improved. In particular, by causing a filler which is hollow and light in specific gravity, such as glass balloon, to be contained, it is possible to improve the reinforcing effect, while ensuring a lightweight property.

As necessary, in addition to the components shown above, a known additive may also be caused to be appropriately contained in the curing composition. Examples of the known additive include a tackifier (such as, e.g., a rosin resin, a rosin ester, a terpene resin, a coumarone indene resin, or a petroleum resin), a colorant (such as, e.g., a pigment), a thixotropic agent (such as, e.g., montmorillonite), an antiscorching agent, a stabilizer, a lubricant, a softener, a plasticizer, an antiaging agent (such as, e.g., an amine-ketone-containing antiaging agent, an aromatic secondary amine-containing antiaging agent, a phenol-containing antiaging agent, a benzimidazole-containing antiaging agent, a thiourea-containing antiaging agent, or a phosphorous acid-containing antiaging agent), an antioxidant, an ultraviolet absorbent, a fungicide, and a flame retardant.

The curing composition can be prepared as a kneaded product by mixing the resin and the filler, which is mixed as necessary, in the mixing ratio shown above, kneading the mixture using, e.g., a mixing roll, a pressure kneader, or the like that has been pre-heated, cooling the mixture, further mixing the mixture with the curing agent, the curing accelerator mixed as necessary, and the additive mixed as necessary, and kneading the mixture.

The curing composition is prepared such that the kneaded product thus obtained has a flow tester viscosity (60 °C, 20 kg load) in a range of, e.g., 100 to 2000 Pa-s, or further 200 to 500 Pa-s.

Thereafter, the obtained kneaded product is rolled by, e.g., calendar molding, extrusion molding, press molding, or the like under a temperature condition under which a curing reaction does not substantially proceed (e.g., at a temperature of not more than 80 °C), whereby the resin layer is formed by, e.g., laminating the resin layer on the surface of the mold release paper. Subsequently, the constraining layer is laminated on (sticked to) the surface of the resin layer opposite to the side on which the release paper is laminated, whereby the reinforcing material for a vehicle ceiling material is obtained.

The thickness of the resin layer thus formed is in a range of, e.g., not more than 0.8 mm, or preferably not more than 0.6 mm, and normally not less than 0.3 mm, or preferably not less than 0.4 mm.

The total thickness of the resin layer and the constraining layer, i.e., the thickness of the reinforcing material for a vehicle ceiling material is set to a range of, e.g., not more than 1 mm, or preferably not more than 0.8 mm, and normally not less than 0.4 mm, or preferably not less than 0.5 mm. When the thickness of the reinforcing material for a vehicle ceiling material exceeds the range shown above, there may be a case where the reinforcing material for a vehicle ceiling material cannot be securely sticked (temporarily joined) to the vehicle ceiling material when the space between the vehicle ceiling material and the roof panel is narrow.

The adhesive strength of the reinforcing material for a vehicle ceiling material in a 90° peel test on a polyester non-woven fabric is not less than 1.0 N/25 mm, preferably not less than 1.5 N/25 mm, or more preferably not less than 2 N/25 mm, and normally not more than 50 N/25 mm. When the adhesive strength of the reinforcing material for a vehicle ceiling material in the 90° peel test on the polyester non-woven fabric is under the range shown above, the reinforcing material for a vehicle ceiling material cannot be securely sticked (temporarily joined) to the vehicle ceiling material via the polyester non-woven fabric.

In the 90° peel test, measurement is performed in accordance with the description in "Adhesive Tape/Adhesive Sheet Test Method" of JIS Z2037. The weighing of the non-woven polyester fabric is normally in a range of 10 to 30 $g/m^3$, and is, e.g., 30 $g/m^3$. More specifically, as the polyester non-woven fabric (with a weighing of 30 $g/m^3$), a spunbond non-woven fabric (commercially available from Toyobo Co., Ltd.), e.g., is used.

The reinforcing material for a vehicle ceiling material is sticked to a steel plate (cold-rolled steel plate, SPCC-SD, commercially available from Nippon Testpanel Co., Ltd.) having a thickness of 0.8 mm. After being heated at 200 °C for one minute, the reinforcing material for a vehicle ceiling material has a flexural strength of not less than 10 N, preferably not less than 11 N, or more preferably not less than 12 N, and normally not more than 30 N at a displacement of 1 mm, and a maximum flexural strength of not less than 40 N, preferably not less than 45 N, or more preferably not less than 50 N, and normally not more than 200 N.

When the flexural strength at a displacement of 1 mm and the maximum flexural strength are under the range shown above, the vehicle ceiling material cannot be sufficiently reinforced.

After being sticked to the steel plate mentioned above, and heated at 200 °C for one minute, the reinforcing material for a vehicle ceiling material has a flexural strength of preferably not less than 20 N, or more preferably not less than 23 N, and normally not more than 50 N at a displacement of 2 mm.

In the flexural test described above, the reinforcing material for a vehicle ceiling material formed with a length of 150 mm and a width of 25 mm is sticked to the steel plate mentioned above, and heated at 200 °C for one minute. Then, measurement is performed by a three-point flexural test in which the distance between support points is set to 100 mm, and the mid-point (lengthwise and widthwise mid-point) therebetween is pressed with an indentor having a diameter of 10 mm at a speed of 5 mm/minute. The steel plate (in a state where the reinforcing material for a vehicle ceiling material is not stuck thereto) used in the flexural test has a flexural strength of, e.g., about 9 N at a displacement of 1 mm, a flexural strength of, e.g., about 18 N at a displacement of 2 mm, and a maximum flexural strength of, e.g., about 35 N.

In the reinforcing material for a vehicle ceiling material, an amount of formaldehyde in a Tedlar bag method shown below is, e.g., not more than 100 $\mu g/m^3$, preferably not more than 90 $\mu g/m^3$, or more preferably not more than 80 $\mu g/m^3$. When the amount of formaldehyde in the Tedlar bag method exceeds the range shown above, the use of the reinforcing material for a vehicle ceiling material may be limited in terms of environmental measures.

Tedlar Bag Method: After the reinforcing material for a vehicle ceiling material (80 $cm^2$) is placed in a Tedlar bag with a capacity of 10 L, tightly sealed in the Tedlar bag, and heated at 65 °C for two hours, an amount of formaldehyde in the Tedlar bag is measured, and determined in accordance with a formula shown below.

$$\text{Amount of Formaldehyde } (\mu g/m^3) = \text{Amount of Formaldehyde } (\mu g) \text{ in Tedlar Bag/Capacity } (m^3) \text{ in Tedlar Bag.}$$

The amount of formaldehyde in the Tedlar bag is measured in accordance with a gas chromatographic method.

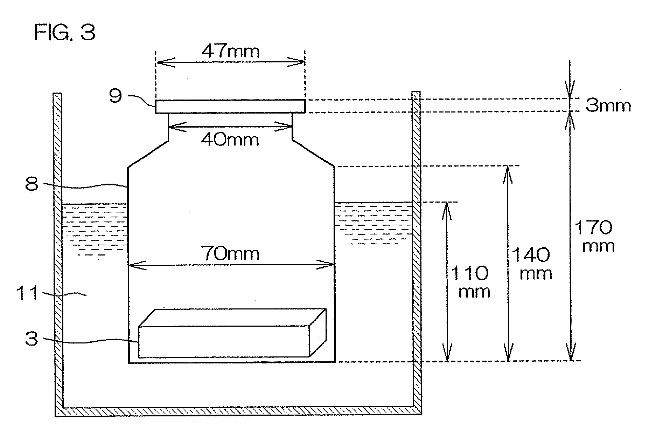

The reinforcing material for a vehicle ceiling material allows a haze value of a glass plate under the following test condition shown by reference in FIG. 3 to be set to a value of, e.g., not more than 15, preferably not more than 13, or more preferably not more than 10. When the haze value exceeds the range shown above, it may be difficult to ensure excellent visibility at the window glass of a vehicle or the like due to the occurrence of fogging.

Test Condition: After a bottom-closed cylindrical glass bottle with a mouth 8 (having a mouth inner diameter of 40 mm, a cylindrical inner diameter of 70 mm, and a height of 170 mm) in which a reinforcing material for a vehicle ceiling material 3 having a length of 100 mm, a width of 50 mm, and a thickness of 10 mm is sealed is placed in an oil bath (wherein a depth of oil is 110 mm) at 80 °C, the mouth is lidded with a glass plate 9, a cooling plate (not shown) as an iron plate is placed on the glass plate 9, the bottom-closed cylindrical glass bottle with the mouth 8 is allowed to stand for 20 hours, and then the haze value of the glass plate is measured.

The cooling plate not shown cools the glass plate 9.

Of the bottom-closed cylindrical glass bottle with the mouth 8 under the test condition mentioned above, the portion having, for example, a cylindrical inner diameter of 70 mm has a height of 140 mm, and is formed in a shape gradually tapered from the upper end thereof toward the lower end of the opening. The glass plate 9 is formed in a generally rectangular shape when viewed in plan view, and has a length of 47 mm, a width of 47 mm, and a thickness of 3 mm. The temperature of the cooling plate is set to 20±2 °C.

The haze value is calculated by measuring the transmittance of diffuse light through the glass plate 3 and the transmittance of the transmitted light after the test described above using a haze meter.

As the haze value is lower, it shows a more excellent light transmittance, and a lower degree of clouding (fogging) of the glass plate.

The reinforcing material for a vehicle ceiling material thus obtained is sticked to the ceiling material of any of a variety of vehicles such as an automobile, and used to reinforce the ceiling material thereof.

More specifically, as shown in FIG. 1(a), in the reinforcing material for a vehicle ceiling material 3, a resin layer 2 is laminated on a constraining layer 1, and mold release paper 10 is sticked as necessary to the surface of the resin layer 2. At the time of use, the mold release paper 10 is stripped from the surface of the resin layer 2, as indicated by the imaginary line, and the surface of the resin layer 2 is sticked (temporarily joined or fixed) to the vehicle-outside side (the surface located in opposing relation to a roof panel 6 indicated by the imaginary line, and made of, e.g., a polyester non-woven fabric or the like) of a vehicle ceiling material 4, as shown in FIG. 1(b). Thereafter, as shown in FIG. 1(c), the reinforcing material for a vehicle ceiling material 3 is heated to a predetermined temperature (in a range of, e.g., 160 to 210 °C), or heated/pressurized (at, e.g., 160 to 210 °C and 0.15 to 10 MPa) to be cured to form a cured material layer 5. The reinforcing material for a vehicle ceiling material 3 is used in such a manner that it is sticked (permanently joined or fixed).

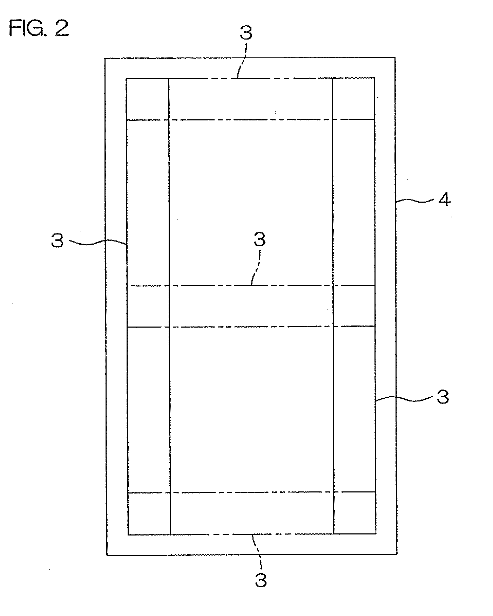

More specifically, after the vehicle ceiling material 4 is formed, e.g., the reinforcing material for a vehicle ceiling material 3 obtained as described above is sticked to a desired portion of the vehicle ceiling material 4, i.e., the portion thereof where improved rigidity is needed. For example, as shown in FIG. 2, the reinforcing material for a vehicle ceiling material 3 is sticked to the both end portions in the vehicle width direction of the vehicle ceiling material 4, which is formed in a generally rectangular shape when viewed in plan view and extending long in the vehicle front-to-rear direction, so as to extend along the vehicle front-to-rear direction in parallel relation. Then, the reinforcing material for a vehicle ceiling material 3 is cured by heating or heating/pressurization during the post processing of the vehicle ceiling material 4. In this manner, the both widthwise end portions of the vehicle ceiling material 4 are reinforced with the reinforcing material for a vehicle ceiling material 3.

The position where the reinforcing material for a vehicle ceiling material 3 is sticked is not limited thereto. For example, as indicated by the imaginary lines, a plurality of the reinforcing material for a vehicle ceiling material 3 may also be provided along the vehicle width direction.

The reinforcing material for a vehicle ceiling material 3 is securely sticked to the desired portion of the vehicle ceiling material 4, i.e., the portion thereof where improved rigidity is needed, and cured by heating to allow a reliable improvement in the rigidity of the vehicle ceiling material 4.

As a result, it is possible to improve rigidity without increasing the weighing of the vehicle ceiling material 4, and thereby ensure a lightweight property. In addition, because there is no need for a plenty of material, production cost can be reduced. Further, since the thickness of the vehicle ceiling material 4 is not increased, the vehicle ceiling material 4 can be reinforced even when the space between the vehicle ceiling material 4 and the roof panel 6 is narrow, as long as the position where the reinforcing material for a vehicle ceiling material 3 is sticked can be reserved.

It is also unnecessary to individually produce a frame in accordance with the vehicle type. After the vehicle ceiling material 4 is formed, the reinforcing material for a vehicle ceiling material 3 is sticked to the portion of the vehicle ceiling material 4 where improved rigidity is needed to allow simple and convenient reinforcement of the vehicle ceiling material 4.

EXAMPLES

The present invention is described more specifically by showing the examples and the comparative examples hereinbelow. However, the present invention is by no means limited thereto.

EXAMPLES 1 to 4 and COMPARATIVE EXAMPLES 1 and 2

In the mixing formula shown in Table 1, individual components were mixed and kneaded using a mixing roll to prepare a kneaded product. In the kneading, an epoxy resin, a filler, and rubber (only in COMPARATIVE EXAMPLE 2) were first kneaded using the mixing roll preheated to 120 °C. Thereafter, the kneaded product was cooled to 50 to 80 °C, a curing agent, a curing accelerator, and a foaming agent (only in COMPATATIVE EXAMPLES 1 AND 2) were added thereto, and the resulting mixture was further kneaded using the mixing roll to provide the kneaded product (curing composition). Then, the obtained kneaded product was rolled into a sheet-like shape by press molding, and laminated on a surface of mold release paper to form a resin layer having a thickness of 0.5 mm.

Thereafter, a constraining layer made of glass cloth having a thickness of 0.2 mm was sticked to the surface of the resin layer opposite to the side on which the release paper was laminated, whereby the reinforcing material for a vehicle ceiling material in which the total thickness of the resin layer and the constraining layer was 0.7 mm was produced.

Table 1

| Examples/Comparative Examples | | | Example 1 | Exam ple 2 | Exam ple 3 | Exam ple 4 | Comparative Example 1 | Comparative Example 2 | Reference Example 1 |
|---|---|---|---|---|---|---|---|---|---|
| Mixing Formula of Each Component (in Resin Layer) | Epoxy Resin | #828 | 100 | - | - | - | 100 | - | - |
| | | #834 | - | 100 | 100 | 100 | - | 80 | |
| | Curing Agent | EH-4388S | 10 | - | - | - | - | - | |
| | | EH-4370S | - | 15 | 10 | 10 | - | - | |
| | | Dicyandiamide | - | - | 5 | 5 | 5 | 5 | |
| | Curing Accelerator | Imidazole Compound | 2 | 2 | - | - | 1 | 1 | |
| | Filler | Tale | 100 | 80 | 60 | 60 | 100 | 100 | |
| | | Calcium Carbonate | - | - | - | - | 40 | 40 | |
| | | Organic Bentonite | 10 | 8 | 10 | 10 | 10 | 10 | |
| | | Carbon Black | 0.5 | 0.5 | - | - | 1 | 1 | |
| | | Glass Powder | - | - | 20 | 20 | - | - | |
| | | Glass Balloon | - | - | - | 20 | - | - | |
| | Rubber | NBR1042 | - | - | - | - | - | 20 | |
| | Foaming Agent | OBSH | - | - | - | - | 2 | 2 | |

(continued)

| Examples/Comparative Examples | | | Example 1 | Exam ple 2 | Exam ple 3 | Exam ple 4 | Comparative Example 1 | Comparative Example 2 | Reference Example 1 |
|---|---|---|---|---|---|---|---|---|---|
| Evaluation of Reinforcing Material for Vehicle Ceiling Material | Adhesive Strength to Polyester Non-Woven Fabric (N/25 mm) | 90 °C Peel Test | 1.7 | 3.6 | 2.5 | 1.6 | 1.2 | Unmeasurable | - |
| | Flexural Strength (N) | at Displacement of 1 mm | 13.0 | 14.2 | 16.0 | 16.0 | 8.6 | 9-4 | 9.6 |
| | | at Displacement of 2 mm | 24.2 | 26.7 | 31.9 | 30.2 | 16.7 | 17.6 | 18.1 |
| | | Maximum | 53.7 | 87.4 | 134.1 | 110.8 | 35.7 | 35.7 | 35.0 |
| | Amount of Formaldehyde ($\mu$g/m$^3$) | 65 °C x 2 hours Tedlar Bag Method | <10 | <10 | <10 | <10 | <10 | <10 | - |
| | Haze Value of Glass Plate | 80 °C x 2 hours | 1.2 | 2.5 | 1.5 | 1.5 | 28 | 25 | |
| | Weighing (g/m$^2$) (with Thickness of 0.7 mm) | | 1005 | 975 | 970 | 810 | 1060 | 1070 | - |

Acronyms, abbreviations, and the like in Table 1 are shown hereinbelow.

#828: a bisphenol A type epoxy resin with an epoxy equivalent of 190 g/equiv., commercially available under the tradename of "#828" from Japan Epoxy Resins Co., Ltd.
. #834: a bisphenol A type epoxy resin having an epoxy equivalent of 250 g/equiv., commercially available under the tradename of "#834" from Japan Epoxy Resins Co., Ltd.
· EH-4388S: a mixture of a dicyandiamide derivative and an organic compound having a melting point of 170 °C, commercially available under the tradename of ADEKA HARDENER EH-4388S from Adeka Corporation · EH-4370S: modified aliphatic polyamine having a melting point of 125 °C, commercially available under the tradename of ADEKA HARDENER EH-4370S from Adeka Corporation
· Imidazole Compound: 2MAOK (a curing accelerator), commercially available from Shikoku Chemicals Corporation
· Talc: commercially available under the tradename of "S Talc" from Nihon Kasseki Seiren Co., Ltd.
· Organic Bentonite: commercially available under the tradename of "Organite" from Nihon Yukinendo Co., Ltd.
· Carbon Black: insulating carbon black commercially available under the tradename of "Asahi #50" from Asahi Carbon Co., Ltd.
· Glass Powder: glass powder having a specific gravity of 2.58 and a mean fiber length of 10.5 μm, commercially available under the tradename of "PF70E-001" from Nitto Boseki Co., Ltd.
· Glass Balloon: glass balloon having an apparent specific gravity of 0.36 and a mean particle diameter of 52 μm, commercially available under the tradename of "CEL-STAR-Z-36" from Tokai Kogyo Co., Ltd.
· NBR1042: acrylonitrile butadiene rubber having an acrylonitrile content of 33.5 wt% and a Mooney viscosity of 77.5 (ML1+4, 100 °C), commercially available under the tradename of "NBR1042" from Nippon Zeon Co., Ltd.
· OBSH: 4,4'-oxybis(benzen-sulfonyl hydrazide), commercially available under the tradename of "NEOCELLBORN® N#1000S" from Eiwa Chemical Industrial Co., Ltd.

Evaluation of Reinforcing Material for Vehicle Ceiling Material

(1) Adhesive Strength to Polyester Non-Woven Fabric

The reinforcing material for a vehicle ceiling material of each of the examples and the comparative examples was cut into a sample having a width of 25 mm and a length of 150 mm; and the adhesive strength thereof to a polyester non-woven fabric (having a weighing of 30 g/m$^3$, commercially available from Toyobo Co., Ltd.) was measured at a room temperature. The adhesive strength was measured in accordance with the 90° peel test described in "Adhesive Tape/Adhesive Sheet Test Method" of JIS Z2037. The result of the measurement is shown in Table 1.

(2) Flexural Strength

The reinforcing material for a vehicle ceiling material of each the examples and the comparative examples was cut into a sample having the dimensions shown above. After the sample was sticked to a steel plate (a cold-rolled steel plate, SPCC-SD, commercially available from Nippon Testpanel Co., Ltd.) having a thickness of 0.8 mm mentioned above, and heated at 200 °C. for one minute, the flexural strength thereof at a displacement of 1 mm, the flexural strength thereof at a displacement of 2 mm, and the maximum flexural strength thereof were each measured in accordance with a three-point flexural test. As Reference Example 1, the flexural strengths of a steel plate to which the reinforcing material for a vehicle ceiling material was not sticked were also similarly measured. The result of the measurement is shown in Table 1.

(3) Amount of Formaldehyde

The reinforcing material for a vehicle ceiling material of each of the examples and the comparative examples was cut into a sample having an area of 80 cm$^2$. Then, the sample was placed in a Tedlar bag, and an amount of formaldehyde in the Tedlar bag after heating at 65 °C for two hours was measured in accordance with the Tedlar bag method described above. The amount of formaldehyde in the Tedlar bag was measured by gas chromatograph (with a limit of detection of 10 μg/m$^3$). The result of the measurement is shown in Table 1.

(4) Haze Value of Glass Plate

As shown in FIG. 3, the reinforcing material for a vehicle ceiling material of each of the examples and the comparative examples was heated under the test condition shown above. Thereafter, a haze value of a glass plate (with a thickness of 3 mm) was measured using a haze meter (Model No. HM-150, commercially available from Murakami Color Research Laboratory Co., Ltd.). The result of the measurement is shown in Table 1.

(5) Measurement of Weight (Weighing)

The reinforcing material for a vehicle ceiling material of each of the examples and the comparative examples was cut into a sample having a width of 25 mm and a length of 150 mm. The weight thereof was measured using an electronic weighing machine (Model No. BL320H, commercially available from Shimadzu Corporation), and converted into a weight per square meter, whereby a weighing (g/m$^2$) was calculated. The result of the calculation is shown in Table 1.
While the illustrative embodiments of the present invention are provided in the above description, such is for illustrative purpose only and it is not to be construed limitative. Modification and variation of the present invention which will be obvious to those skilled in the art is to be covered by the following claims.

Industrial Applicability

The reinforcing material for a vehicle ceiling material of the present invention is used for, e.g., reinforcement of the vehicle ceiling material of the roof of an automobile.

**Claims**

1.   A reinforcing material for a vehicle ceiling material, having:

an adhesive strength of not less than 1.0 N/25 mm in a 90 ° peel test on a polyester non-woven fabric; and
a flexural strength of not less than 10 N at a displacement of 1 mm, and a maximum flexural strength of not less than 40 N after the reinforcing material for a vehicle ceiling material is sticked to a steel plate having a thickness of 0.8 mm, and heated at 200 °C for one minute.

2.   The reinforcing material for a vehicle ceiling material according to Claim 1, comprising:

a constraining layer; and
a reinforcing layer.

3.   The reinforcing material for a vehicle ceiling material according to Claim 1, having a thickness of not more than 1 mm.

4.   The reinforcing material for a vehicle ceiling material according to Claim 1, wherein an amount of formaldehyde in a Tedlar bag method shown below is not more than 100 μg/m$^3$.
Tedlar Bag Method: After the reinforcing material for a vehicle ceiling material (80 cm$^2$) is placed in a Tedlar bag with a capacity of 10 L, tightly sealed in the Tedlar bag, and heated at 65 °C for two hours, an amount of formaldehyde in the Tedlar bag is measured, and determined in accordance with a formula shown below:

$$\text{Amount of Formaldehyde } (\mu g/m^3) = \text{Amount of Formaldehyde } (\mu g) \text{ in}$$

$$\text{Tedlar Bag/Capacity } (m^3) \text{ in Tedlar Bag.}$$

5.   The reinforcing material for a vehicle ceiling material according to Claim 1, wherein a haze value of a glass plate under a test condition shown below can be adjusted to be not more than 15.
Test Condition: After a bottom-closed cylindrical glass bottle with a mouth (having a mouth inner diameter of 40 mm, a cylindrical inner diameter of 70 mm, and a height of 170 mm) in which the reinforcing material for a vehicle ceiling material having a length of 100 mm, a width of 50 mm, and a thickness of 10 mm is sealed is placed in an oil bath (wherein a depth of oil is 110 mm) at 80 °C, the mouth is lidded with the glass plate, an iron plate is placed as a weight on the glass plate, the bottom-closed cylindrical glass bottle with the mouth is allowed to stand for 20 hours, and then the haze value of the glass plate is measured.

FIG. 1

(a)

(b)

VEHICLE-OUTSIDE SIDE

VEHICLE-INSIDE SIDE

(c)

VEHICLE-OUTSIDE SIDE

VEHICLE-INSIDE SIDE

FIG. 2

FIG. 3

## INTERNATIONAL SEARCH REPORT

| | International application No. |
|---|---|
| | PCT/JP2007/068554 |

A. CLASSIFICATION OF SUBJECT MATTER
*B60R13/02*(2006.01)i, *B32B27/12*(2006.01)i

According to International Patent Classification (IPC) or to both national classification and IPC

B. FIELDS SEARCHED

Minimum documentation searched (classification system followed by classification symbols)
B60R13/02, B32B27/12

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-27466 A (Japan Vilene Co., Ltd.), 29 January, 2004 (29.01.04), Par. Nos. [0049] to [0064] & US 2003/203687 A1 | 1-5 |
| Y | JP 2005-41210 A (Nitto Denko Corp.), 17 February, 2005 (17.02.05), Full text; Fig. 1 & US 2005/25955 A1        & EP 1493558 A1 | 1-5 |
| A | JP 2001-341146 A (TS Tech Co., Ltd.), 11 December, 2001 (11.12.01), Par. No. [0049] (Family: none) | 1-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 December, 2007 (14.12.07) | 25 December, 2007 (25.12.07) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2007/068554

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-138550 A (Three Bond Co., Ltd.), 30 May, 1995 (30.05.95), Par. No. [0002] (Family: none) | 1-5 |

Form PCT/ISA/210 (continuation of second sheet) (April 2007)

**EP 2 072 340 A1**

## REFERENCES CITED IN THE DESCRIPTION

**Patent documents cited in the description**

- JP 11343358 A